Europäisches Patentamt

**European Patent Office**

Office européen des brevets

(11) Publication number: **0 013 500**
**A1**

## EUROPEAN PATENT APPLICATION

(21) Application number: **79302968.7**

(22) Date of filing: **19.12.79**

(51) Int. Cl.³: **E 02 B 15/04**

(30) Priority: **19.12.78 GB 4912178**

(43) Date of publication of application:
**23.07.80 Bulletin 80/15**

(84) Designated Contracting States:
**BE DE FR IT NL SE**

(71) Applicant: **Fram Europe Limited**
**Llantrisant Pontyclun**
**Mid Glamorgan CF7 8YU(GB)**

(72) Inventor: **Smith, Peter Brian**
**Saltersford Hall**
**Holmes Chapel, Cheshire(GB)**

(74) Representative: **Deans, Michael John Percy**
**Lloyd Wise, Tregear & CO. Norman House 105-109**
**Strand**
**London WC2R OAE(GB)**

(54) Apparatus and method for removing oil from water surfaces.

(57) Apparatus is described for removing pollutant oil and the like floating on a water surface, comprising: an endless belt (1) formed of expandible mesh material, and having oleophilic properties, which belt (1) is provided with drive and support means (2,4,6) adapted both to support and drive the belt (1) in a first region at or immediately below the water surface to pick up pollutant oil and the like on the belt (1) and to expand the mesh of the belt (1) in a direction at right angles to the direction of movement thereof in a second region above the water level to thereby facilitate detachment of pollutant oil and the like carried by the belt (1).

A method of removing pollutant oil and the like floating on a water surface is also described, comprising: passing a belt formed of expandible mesh material, and having oleophilic properties, through said pollutant oil and the like with the mesh relatively closed to thereby pick up a portion of the pollutant oil and the like on the belt; and expanding the mesh of the belt in a direction at right angles to its direction of movement at a position remote from the water to facilitate detachment of pollutant oil and the like carried by the belt.

./...

Croydon Printing Company Ltd.

FIG.1.

REMOVING OIL

## Field of the Invention

This invention relates to the removal of oil floating on a water surface.

As will become apparent from the detailed description which follows, a principal use (although not necessarily the only use) for methods and apparatus in accordance with the present invention is in clearing up oil spillage which has occurred on the surface of the sea, rivers, inland waterways, gravel pits, etc., particularly where rapid removal of an oil slick has to be accomplished in order to avoid pollution and ecological damage.

## Background to the Invention

In recent years with increasing interest and concern with environmental problems, numerous systems have been proposed for removing and collecting oil floating on water surfaces. Both mechanical and chemical systems have been suggested. A principal disadvantage which has become apparent on seeking to put the numerous prior paper proposals into practice has been their marked inability to work effectively in a rough sea. This is especially so in the case of suction devices, where wave motion results in the device ingesting large quantities of sea water along with the oil, rendering the rate of oil removal unsatisfactorily slow and also making subsequent processing of the collected oil more difficult.

## Description of the Invention

In accordance with a first aspect thereof, the present invention provides apparatus for removing pollutant oil and the like floating on a water surface, comprising: an endless belt, formed of expandible mesh material, and having oleophilic properties, which belt is provided with drive and support means adapted both to support and drive the belt in a first region at or immediately below the water surface to pick up pollutant oil and the like on the belt and to expand the mesh of the belt in a direction at right angles to the direction of movement thereof in a second region above the water level to thereby facilitate

0013500

detachment of pollutant oil and the like carried by the belt.

In a second and alternative aspect of this invention, there is provided a method of removing pollutant oil and the like floating on a water surface, the method comprising: passing a belt formed of expandible mesh material, and having oleophilic properties, through said pollutant oil and the like with the mesh relatively closed to thereby pick up a portion of the pollutant oil and the like on the belt; and expanding the mesh of the belt in a direction at right angles to its direction of movement at a position remote from the water to facilitate detachment of pollutant oil and the like carried by the belt.

The term "pollutant oil and the like" is used herein to encompass one or more of oil, including heavy crude oil or heavier tarry constituents of oil, oil/water mousse, and other petroleum or liquid fuel based products liable to pollute bodies of water whether inadvertently or by illegal or antisocial design.

The belt, which may be of a compound construction including a number of components with different size mesh to thereby collect a broad range of oil droplet sizes, may be formed of a material which is itself oleophilic. Alternatively, or additionally, the material of the mesh may be treated with a silicone coating which may be cured thereon.

Pollutant oil and the like may be stripped from the belt in the expanded mesh region by washing with water, which may be pre-heated. The resulting washings consisting of an oil/water mixture may be subjected to any suitable separation treatment applicable to such mixtures, such as by passing the mixture through a conventional plate separator and/or a conventional coalescer system. Oil so separated may be passed to a storage tank and the water, containing only minor quantiti of remaining oil, may be recirculated for further washing.

For use at sea, the apparatus is usefully mounted in and from a ship.

The invention is hereinafter more particularly described by way of example only with reference to the accompanying drawings.

Brief Description of the Drawings

Figure 1 is a schematic cross-sectional view through an apparatus constructed in accordance with the present invention mounted on and from a ship.

Figure 2 is a view of the belt of the apparatus of Figure 1 seen from above.

Figure 3 is a sectional view taken along the line III - III in Figure 2.

Figure 4 shows a small section of the mesh of the belt of Figures 1 to 3 in its unexpanded condition.

Figures 5A and 5B indicate schematically how small and large oil droplets may be supported by a single mesh cell of the belt in its unexpanded condition, and Figure 5C similarly shows how large lumps of oil and oil/water mousse may be supported by a plurality of mesh cells.

Figure 6 is a schematic cross-sectional view generally similar to Figure 1 illustrating a second embodiment of apparatus constructed according to this invention and mounted on and from a ship.

Figure 7 is a section taken through one pontoon section along the line VII - VII shown in Figure 2.

Figure 8 is a schematic circuit diagram of a microprocessor control system for the apparatus of Figures 6 and 7.

Figure 9 illustrates one method of deploying apparatus constructed in accordance with the present invention on a ship at sea.

Figures 10 and 11 show alternative methods of deploying the apparatus.

Description of the Preferred Embodiments

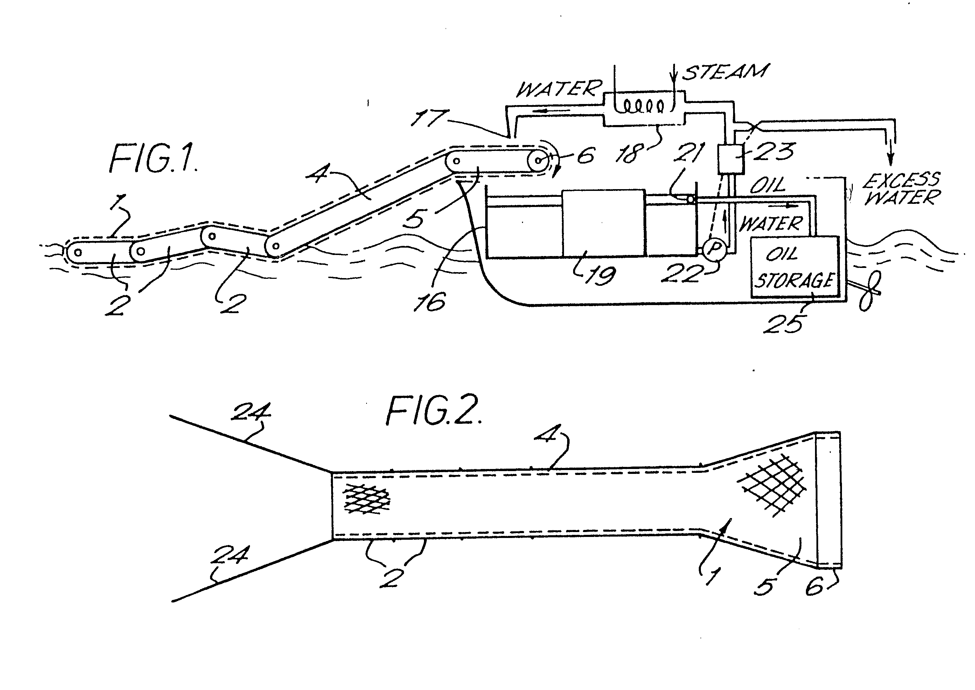

Figures 1 and 2 show an endless belt 1 formed of expandible mesh material, and having oleophilic properties, supported on a series of pontoons 2 floating at or adjacent the surface of the sea 3, on a support 4 00013500 rising from the sea surface, and on a ship-borne support section 5. Drive 6 for the belt 1 is provided at the inboard side of section 5.

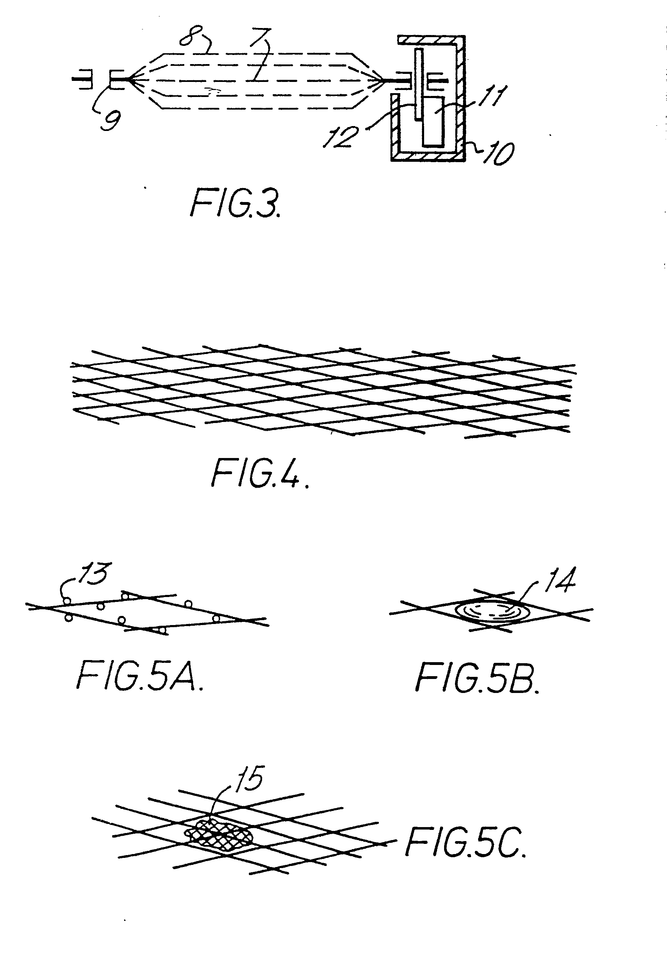

The preferred construction for the belt is shown in Figure 3 in section. It will be seen that the belt of compound construction including a number of component layers 7 with various size mesh to thereby collect (as will be explained below) a broad range of oil droplet sizes. The layers 7 are sandwiched between outer layers of a heavy support mesh 8. The edges of the belt are formed by heat bonding and by inserting a series of eyelets 9. Also shown in section in Figure 3 is one guide-box 10. A similar guide-box would be provided for the other side of the belt. The guide-boxes extend along the respective edges of the supports 2, 4 and 5. Within the guide-boxes run respective drive chains 11 provided with upstanding pins 12 at sections therealong for coaction with the apertures defined by the eyelets 9. The several pontoons 2 and the rising section 4 all have the same lateral width which is chosen so that the mesh is in a relatively unexpanded condition (as shown in Figure 4). The length to width ratio for respective mesh cells in this natural, unstressed condition may be of the order of 8:1. As is best shown in Figure 2, section 5 broadens out from its junction with the rising section 4 to its inboard end. Thus, as the belt travels along the section 5 towards the inboard end, the mesh is steadily expanded laterally by the drive chains 11 and pins 12 pulling the respective longitudinal edges of the mesh. In the fully "open" condition, each mesh cell may have a length to width ratio of approximately 1:1.

The material of the expandible mesh is preferably

0013500

itself oleophilic. A suitable material is polypropylene. Expandible polypropylene mesh material is readily available for example from Netlon Limited. The mesh (whether itself oleophilic or not) is suitably (though not necessarily if the material is itself oleophilic) provided with an oleophilic coating. Thus the most preferred mesh is formed of polypropylene and is treated with a silicone coating which is cured thereon.

Since the mesh material is oleophilic, pollutant oil and the like floating in the surface regions of the sea 3 will tend to be attracted to the mesh, and will be picked up by the belt. Fine discrete droplets of oil will tend to adhere to the surface of the mesh material, as shown at 13 in Figure 5A. Motion of the belts themselves, aided by wave motion, will tend to move the individual droplets along the strands of mesh material, so increasing the chance of coalescence of these droplets 13 into larger droplets. The oleophilic nature of the mesh material together with surface tension effects will provide a "bridging effect" in the voids in the mesh cells so that somewhat larger droplets or larger quantities of oil will tend to adhere to the mesh as shown

0013500

at 14 in Fig. 5B. Large lumps of oil or semi-solid oil/water mousse will tend to be physically lifted out of the water by the moving belt as shown at 15 in Fig. 5C. As the process continues and the belt progresses from the sea on board the ship, coalescence between oil carried in any of the manners 13, 14 or 15 will tend to occur. By forming the belt with a compound construction as described above with reference to Fig. 3, droplets of different sizes will find a mesh size best suited for retaining same, so that the effect of employing a compound belt is to increase the quantity of oil which will be picked up and also to ensure that the apparatus will work effectively over a broad range of conditions which might be found in practice at sea.

At all events, as described above, when the belt reaches the support section 5, the mesh will be steadily expanded laterally to "open" the mesh cells. As will be appreciated, this facilitates detachment of oil carried by the belt. Indeed, drops such as that shown at 14 in Fig. 5B may simply fall through the space in the mesh into receiving tank 16. Water is suitably sprayed over support section 5 from a plurality of nozzles 17 to aid in physical detachment of oil droplets from the belt. The water is suitably heated, for example by means of a heat exchanger 18 which may derive heat from the steam heating system of the ship. The majority of small droplets 13 and drops 14 will tend either to fall through the spaces in the mesh or to be stripped from the belt by the hot water spray. Large lumps of semi-solid oil/water mousse not so detached will tend to fall off the belt when the belt starts its return run. The water washings, together with any oil/water lumps received in tank 16 are subjected to separation, the hot water already having broken up the large oil lumps to some extent. Any suitable separator and/or coalescer system 0013500 may be employed, but that which we prefer is a corrugated plate separator 19 of the type manufactured by us.

Such a separator allows oil containing a minor quantity of water only (as little as, say, 5% water) to be withdrawn from the tank by means of an oil skimmer 21. The water may be re-used. The remaining water containing minor quantities of remaining oil only may be re-used being pumped by means of a pump 22 from the bottom of the tank via an oil content monitor 23, which may be used to control the pump, and thence to the heat exchanger 18. As the water circulatory system is essentially closed, heating may be accomplished with a relatively low expenditure of energy. Since some sea water may be carried on board the vessel by the belt, an excess of water may tend gradually to accumulate in the system. Such excess water may be discharged to sea automatically from the system at a position between the oil content monitor and the heat exchanger, though in this case, the monitored oil content in the water must be sufficiently low to meet the oil discharge regulations. Oil content monitor 23 is employed to regulate the pump 22 such that the flow rate of water in the system is adjusted to achieve a satisfactorily low oil content in such efflux water irrespective of varying oil concentrations received in tank 16.

Collection booms 24 suitably extend forwardly of the floating pontoons 2 as shown in Fig. 2, and an oil slick may be channelled between the booms 24 and on to the belt by moving the ship appropriately. Since the pontoons float, they can follow vertically the wave profiles to a large extend. The system may also have a limited freedom to rotate about its centre line to aid in following the wave profiles.

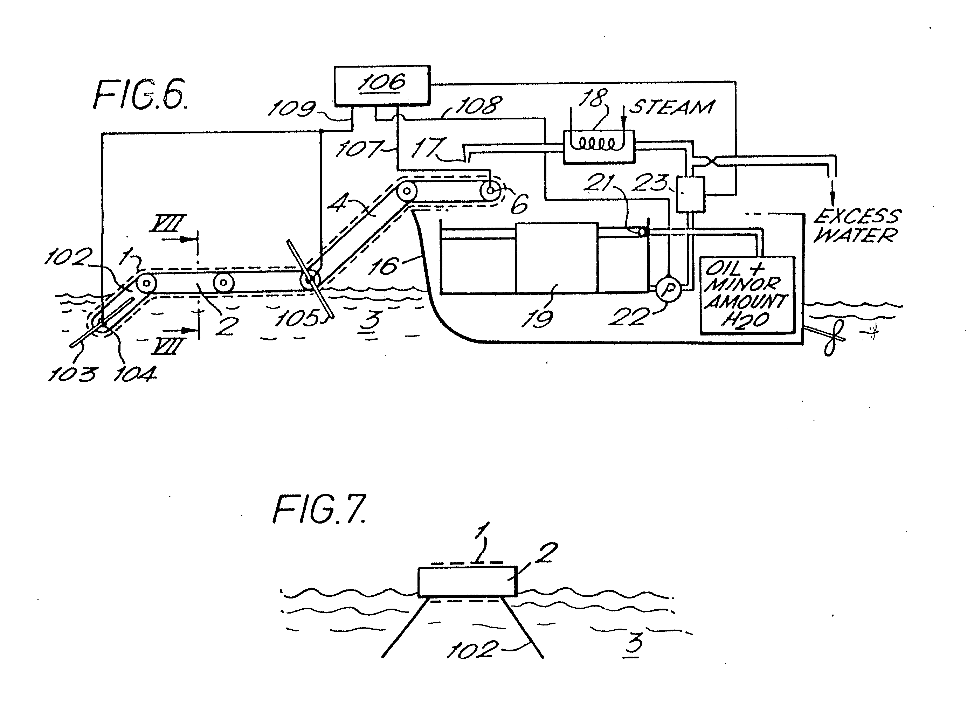

In a rough sea the pivoted pontoon sections may too readily follow the wave contours, the consequent substantial up and down motion tending to spoil the efficiency of oil collection to some extent. As is explained below with reference to Figs. 6 and 7, therefore, stabilizing means are provided for some or all of the pontoon sections, so tending to resist substantial up and down motions thereof, in a modified embodiment.

0013500

If the distal pontoon section is set at a leading angle, the efficiency of oil collection tends to be improv-- and we therefore provide means for setting the leading angle of the distal pontoon section in the modification of Figs. 6 and 7. Additional angle setting means may be provided to maintain one or more other sections of the pontoon as clear of the water surface as possible to avoid oil reentrainment. Preferably the several angle setting means comprise hydroplanes or hydrofoil surfaces capable of being set at selected angles, as we explain below.

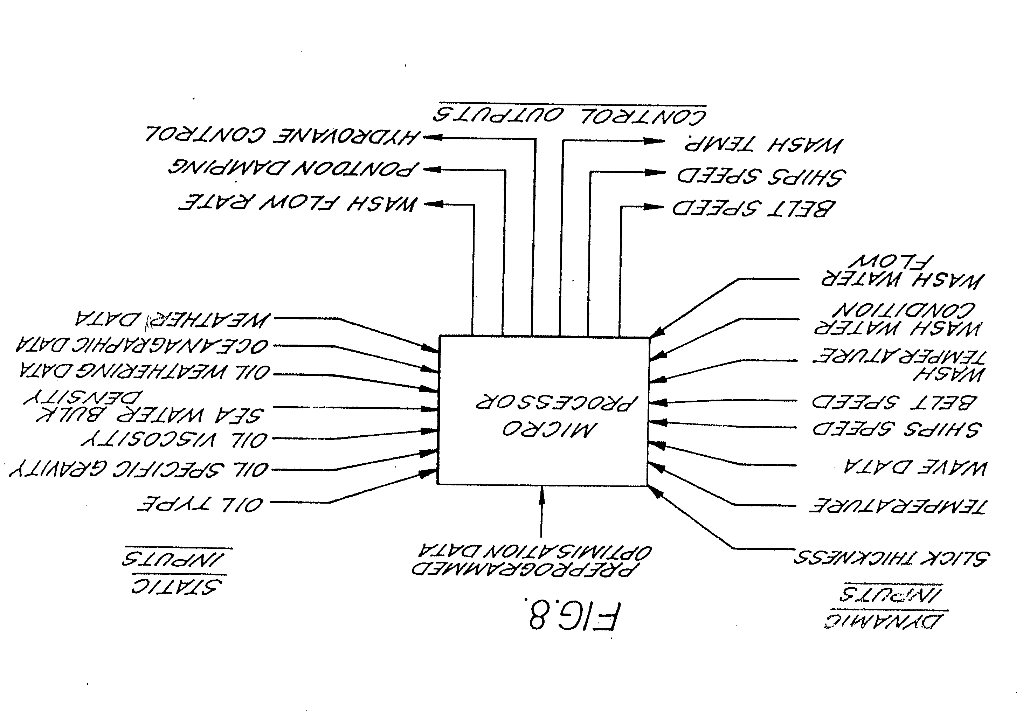

The efficiency of the oil separation process as a whole can be optimized by the application of microprocessor techniques, and a suitable microprocessor control circuit such as is shown schematically in Fig. 8, and which provides programmed outputs for regulating the pump speed, the belt speed, the respective angles set by the angle setting means (if provided), the control circuit taking its inputs from the several controlled means and also from the oil content monitor may also be employed.

The preferred construction for the belt 1 and its manne of operation in the arrangement of Figs. 6, 7 and 8 is as described above with reference to Figs. 1 to 5.

As will be seen from Fig. 7, fin keels 101 are fitted to the underside of a pontoon section 2 alongside and downwardly of the belt 1 along its outward reach. The fins are shown extending at an angle of approximately 45$^{\circ}$ to the horizontal which has been found to be the most suitable angle. The keels may consist of simple flat rectangular boards, but they may be given a profile similar to that of the keel boa of a boat. It has been found that when fin keels 101 as shown are fitted, the up and down motion of the pontoon sections in a rough sea is substantially attenuated.

As will be clear from the schematic sectional view of Fig. 6, the distal pontoon section 102 is set at a leading angle into the sea. This is achieved by the provision of

0013500

angle setting means, here in the form of a pair of hydroplane or hydrofoil surfaces 103, similar to the diving planes provided on a submarine, extending outwardly at the side edge of the leading end of the distal pontoon section. The pair of hydroplanes 103 is pivotable about an axis 104 so as to vary the angle defined by the hydroplane and hence the leading angle of the distal pontoon section into the sea. A second pair of similar hydroplanes 105 are mounted at the prosimal end of the floating pontoon sections 2 adjacent to leading edge of rising section 4. It will be noted that the hydroplanes 105 are set at quite a different angle from the hydroplanes 103. This is in order to keep other sections of the pontoon as clear of the water surface as possible to avoid oil reentrainment. The angles of the hydroplanes 103 and 105 are adjustable, either manually, or preferably, as will be explained below, through a microprocessor control circuit 106.

As was explained in detail hereinabove with reference to Fig. 1, pollutant oil and the like (i.e. oil and oil/water mousse, etc.) with or without additional water removed from the sea by the belt 1 is received in a receiving tank. The operation of the present embodiment is basically similar. Water is suitably sprayed over support section 5 from a plurality of nozzles 17 to aid in physical detachment of oil droplets from the belt. The water is suitable heated, for example by means of a heat exchanger 18 which may derive heat from a steam heating system of a ship. The water washings, together with any oil/water lumps received in the tank 16 are subjected to separation, the hot water already having broken up the large oil lumps to some extent. Any suitable separator and/or coalescer system may be employed, but that preferred is a corrugated plate separator 19 of the type manufactured by Fram Europe Limited. Such a separator allows oil containing a minor quantity of water only (as little as, say, 5% water) to be withdrawn from the tank by means of an oil skimmer 21.

The remaining water containing minor quantities of remaining oil only is re-used being pumped by means of a pump 22 from the bottom of the tank via an oil content monitor 23 to the heat exchanger 18. The water circulatory system is essentially closed, and heating may be accomplished with a relatively low expenditure of energy, as before. Since some sea water may be carried on board the vessel by the belt, an excess of water may tend gradually to accumulate in the system. Such excess water may be discharged to sea automatically from the system at a position between the oil content monitor and the heat exchanger, though in this case, the monitored oil content in the water must be sufficiently low to meet the oil discharge regulations.

The oil content as monitored by the monitor 23 forms one input signal to a microprocessor control circuit 106 providing controlled outputs 107, 108 and 109 respectively for adjusting the belt speed drive 6, the speed of pump 22, and the angles of the respective hydroplanes 103 and 105.

The efficiency of the oil removal and the oil water separating systems are affected by many variables, including, but not limited to, oil type and condition, sea temperature, oil slick thickness, mesh belt speed, vessel speed, wave motion, wash water temperature, was water flow, and wash water contamination. All of these variables affect the efficiency of the removal and separation systems singularly and in interaction with each other.

In the arrangement of Figs. 6, 7 and 8 a microprocessor using conventional digital computing techniques is employed to simultaneously receive input data from a plurality of sensors indicative of the said effiency affecting variables and to process such data singularly and in interaction with each other in accordance with a pre-set program to provide control signals to the various controllable components in response to any or all of the variable parameters to optimise the efficiency of the system over a wide range of operating conditions.

The following sensors are utilised to provide input data to the microprocessor:

1.    Temperature sensors in the sea water and in the wash water;

2.    Capacitance or resistance probes placed immediately ahead of the distal pontoon section 102 to sense oil slick thickness;

3.    Tachometers attached to the mesh belt drive and the wash water pump to provide belt speed and water flow data;

4.    Rotational sensors fitted to the hinge points between pontoon sections to provide data on wave height and period;

5.    A signal from the ship's log proportional to vessel speed through the water;  and

6.    A signal from the oil content monitor 23 proportional to the amount of oil remaining in the wash water.

Certain data is manually entered into the microprocessor at the start of a pollutant oil recovery operation.  Such data includes:

(a)    Oil type;

(b)    Oil viscosity;

(c)    Oil specific gravity;

(d)    Length of time that oil has been in contact with water;

(e)    Minimum and maximum temperatures that oil water mixture has been exposed to since the spill;

(f)    Oceanagraphic data;  and

(g)    Bulk density of sea water.

From this manually entered data, the optimum separation characteristics, and the most probable oil droplet size distribution and the mousse condition can be computed.

Static data manually entered and dynamic data from the various sensors is processed in accordance with the pre-set program to provide control signals to controllable components, which may include:

(a)    Angle setting means, such as the hydroplanes 103 and 105, for controlling the depth of the pontoon sectons;

(b)    Belt drive motor 6 to optimise oil load on the belt;

(c)    Hydraulic dampers at pontoon section hinge points to provide optimum wave following characteristics by changing the natural frequency and damping factors on the pontoon sections;

(d)    Flow and temperature of the wash water to optimise separation efficiency and the breakdown of "mousse";  and

(e)    A visual indication of optimum ship's speed to the helmsman.

For example, the detection of a very thick slick of high specific gravity oil that had been in cold water for many days would signal the hydro-vanes 103 to position the "nose" of the distal pontoon section 102 deep into the oil/ water interface and speed up the belt drive 6 to maximise the belt loading whilst signalling the ship to slow down if the oil slick thickness and condition indicated more oil than the belt could handle.  The oil type and condition data manually entered would have computed the correct wash water temperature to optimise the mesh cleaning, oil separation and mousse breakdown capabilities.

The data from the oil content monitor is used to "fine tune" ship speed, belt speed and water flow by conventional negative feed-back techniques to maximise pick-up rate by optimising separator efficiency.

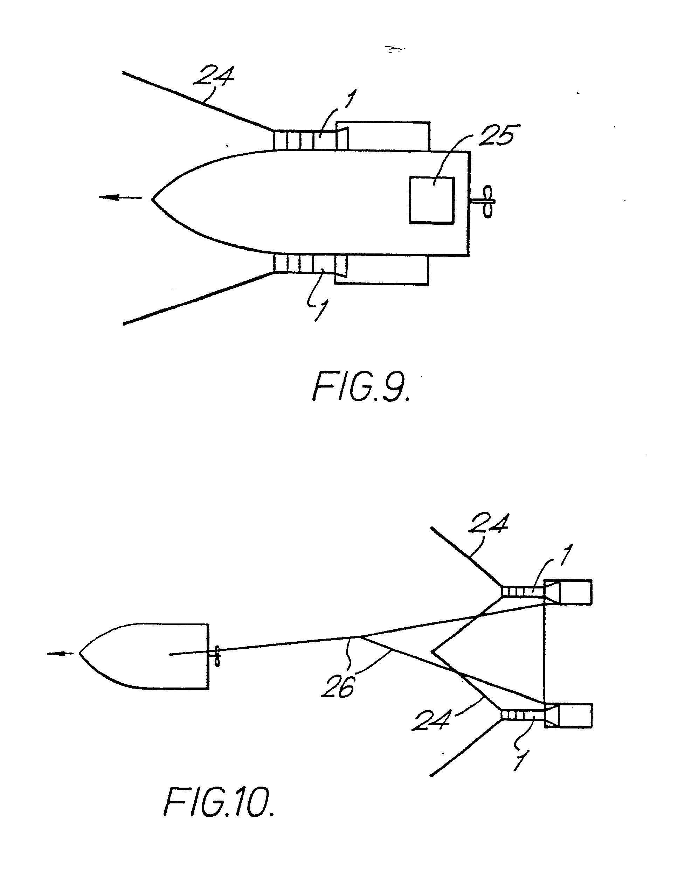

If the vessel is moving, turbulence will tend to be created at its stern.  Figs. 9 and 10 show alternative ways in which apparatus constructed in accordance with the present invention may be deployed relative to a ship so as generally to avoid the regions of turbulence at the stern of the vessel. Thus, in Fig. 9, the apparatus is provided alongside the ship which progresses forwardly slowly into an oil slick, the prow of the vessel dividing the slick into separate regions bounded by collector booms 24 to channel the oil slick towards the respective belts of the two separator systems.  A single separated oil storage tank 25 may be provided in the vessel.

0013500

In the alternative arrangement of Fig. 10, two separator systems with respective collector booms 24 may be towed by means of long tow lines 26 behind the moving vessel. The two separator systems of Fig. 10 should be sufficiently separated from the stern of the vessel that the turbulence there created has largely dissipated before reaching the collector booms 24.

It should be understood that the invention is not restricted to use on board a floating vessel travelling forward, or indeed to use on board a vessel at all.

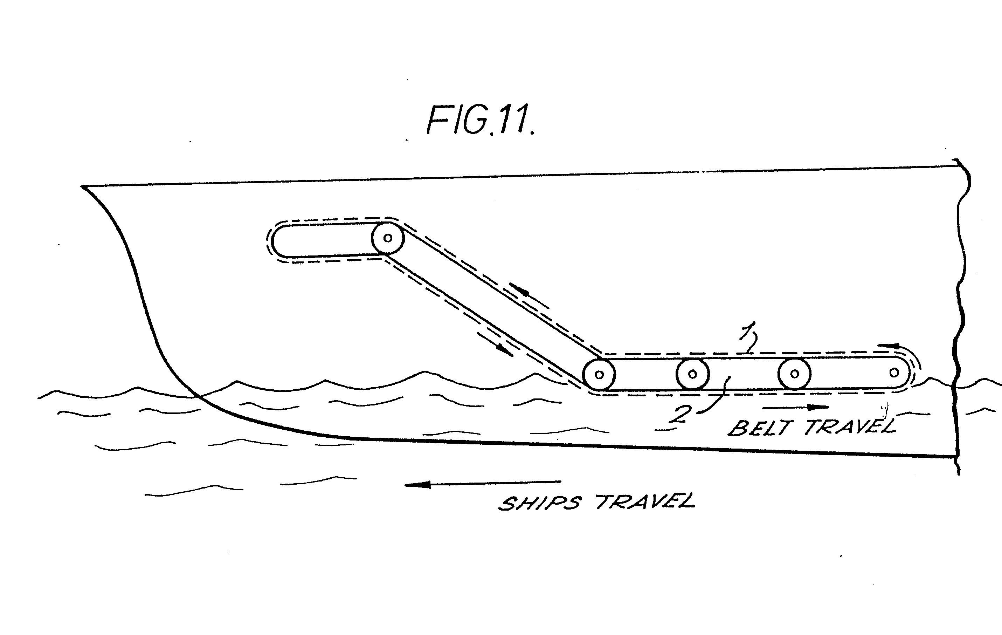

The apparatus may be employed travelling rearwardly as schematically indicated in Fig. 11. By suitable adjustment of the belt drive 6 relative to the forward speed of the vessel, the belt speed relative to the sea surface can become zero providing maximum contact between belt and pollutant oil at the sea surface.

0013500

### Claims

1. Apparatus for removing pollutant oil or the like floating on a water surface, characterised in that it comprises: an endless belt, formed of expandible mesh material and having oleophilic properties, which belt is provided wit' drive and support means adapted both to support and drive the belt in a first region at and immediately below the water surface to pick up pollutant oil and the like on the belt and to expand the mesh of the belt in a direction at right angles to the direction of movement thereof in a second regi·n above the water level to thereby facilitate detachment of pollutant oil and the like carried by the belt.

2. Apparatus according to Claim 1, further characterized in that the belt is of compound construction including a plurality of component layers of different mesh size, to thereby collect oil droplets over a substantial range of sizes, which component layers are sandwiched between outer layers of a heavier support mesh.

3. Apparatus according to Claims 1 or 2, further characterized in that the material of the oleophilic mesh is polypropylene, the surfaces of which are given enhanced oleophilic properties by a silicone coating cured thereon.

4. Apparatus according to any preceding Claim, further characterized in that the drive and support means comprises a plurality of pontoon sections adapted to float at and adjacent the water surface, at least one support in said second region, and one or more intermediate supports, said pontoon sections and said supports being disposed in tandem for travel of the said endless belt thereround.

5. Apparatus according to Claim 4, further characterized in that said pontoon sections and said one or more intermediate supports have the same lateral width, while said at least one support in said second region has edges steadily diverging with distance from the distal pontoon section; and in that all the said supports and the pontoon sections are provided with drive chains constrained to run in guide boxes along their edge regions, which drive chains are provided with pin means cooperating with aperture means located in edge regions of the belt, thereby both to drive said belt forwardly, and to expand said belt widthwise along the length of said at least one support in said second region.

6.     Apparatus according to Claims 4 or 5, further characterized in that one or more of the pontoon sections is (are) provided with stabilizing means for attenuating substantial vertical motion due to wave action, which stabilizing means comprise fin keels fitted to the underside of said one or more pontoon sections alongside and downwardly of the belt along its outward reach.

7.     Apparatus according to Claims 4, 5 or 6, further characterized in that at least the distal pontoon section is provided with angle setting means in the form of hydroplanes or hydrofoil surfaces capable of being set at selected angles whereby to allow the distal pontoon section to be set at a leading angle downwardly into the water.

8.     Apparatus according to any preceding Claim, further characterized in that means are provided for stripping pollutant oil and the like from said belt in said second region and for separating oil so stripped, which means comprise a water circulation system including nozzle means for directing water on to said belt, a tank for receiving oil/water washings from said belt together with any additional water carried by said belt from the said water surface, heater means upstream of said nozzle means, a separator/coalescer for separating from said washings an oil fraction containing only minor quantities of water and a water fraction containing only minor quantities of oil, storage means for storing said oil fraction for subsequent disposal or treatment, pump means for passing said water fraction to said heater means which pump means is coupled to an oil content monitor for monitoring the residual oil content in said water fraction, the oil content monitor being further coupled to discharge means for discharging excess water from the water circulation system when said residual oil content is below a predetermined level.

9. A method of removing pollutant oil and the like floating on a water surface, characterised in that the method comprises: passing a belt formed of expandible mesh material, and having oleophilic properties, through said pollutant oil and the like with the mesh relatively closed to thereby pick up a portion of the pollutant oil and the like on the belt; and expanding the mesh of the belt in a direction at right angles to its direction of movement at a position remote from the water to facilitate detachment of pollutant oil and the like carried by the belt.

10. A method according to Claim 9, further characterized in that the belt is disposed to pass round a plurality of pontoon sections floating at and adjacent the water surface, the distal pontoon section being given a selected leading angle downwardly into the water by angle setting means, and substantial vertical motion of the pontoon sections being attenuated by stabilizing means.

11. A method according to Claims 9 or 10, further characterized in that pollutant oil or the like is stripped from said belt in said remote position and oil so stripped is separated and stored by the steps: directing heated water on to said belt at said remote positions; collecting the resultant oil/water washings; separating from said washings an oil fraction containing only minor quantities of water and a water fraction containing only minor quantities of oil; storing said oil fraction for subsequent treatment or disposal; monitoring the residual oil content of said water fraction and disposing of excess water to said water surface provided said oil content is below a predetermined level while retaining sufficient of said fraction for heating and recirculation as said heated water.

12. A method according to Claim 11, when appendent to Claim 10, further characterized in that said method is performed at sea under the control of a microprocessor receiving variable input data relating to the temperature of the sea water and of the said heated water, to oil slick thickness, to belt speed and heated water flow rate, to wave height and period, to ships speed through the water, and to the said residual oil content; in that the microprocessor is pre-set with data relating to one or more of: oil type, oil viscosity, oil specific gravity, length of time the oil has been in the sea, minimum and maximum ambient temperatures to which it has been exposed since spilling into the sea, oceanographic data, and the bulk density of the sea water; and in that the microprocessor provides control signals for controlling one or more of: the speed of said belt to optimise oil load thereon, said angle setting means to select said leading angle, hydraulic dampers at hinge points between pontoon sections to provide optimum wave following profiles, and flow rate and temperature of said heated water, and optionally for providing a visual indication to the helmsman of optimum ship's speed.

13. A method according to any of Claims 9 to 12, performed on and from a floating vessel travelling in a predetermined direction on said water surface, further characterized in that the belt extends rearwardly of said vessel and the direction and speed of belt motion are chosen such that a substantially zero relative speed between the belt and the water surface results, providing maximum contact between the mesh and said pollutant oil and the like.

14. A method according to any of Claims 9 to 13, further characterized in that the mesh is expanded from a mesh cell ratio of length-to-width of about 8:1 to a mesh cell ratio of about 1:1.

FIG.1.

FIG.2.

WATER  STEAM

OIL

WATER

OIL STORAGE

EXCESS WATER

1/6

0013500

FIG.3.

FIG.4.

FIG.5A.

FIG.5B.

FIG.5C.

# FIG.6.

109

106

108

107

17

18  STEAM

4

6

VII

102

1

16

21  23

102

105

VII

2

103  104

3

19

22

P

OIL +
MINOR
AMOUNT
H2O

EXCESS
WATER

3/6

# FIG.7.

1

2

102

3

0013500

# FIG.8.

**DYNAMIC INPUTS**

SLICK THICKNESS

TEMPERATURE

WAVE DATA

SHIPS SPEED

BELT SPEED

WASH TEMPERATURE

WASH WATER CONDITION

WASH WATER FLOW

PREPROGRAMMED OPTIMISATION DATA

**MICRO PROCESSOR**

**STATIC INPUTS**

OIL TYPE

OIL SPECIFIC GRAVITY

OIL VISCOSITY

SEA WATER BULK DENSITY

OIL WEATHERING DATA

OCEANAGRAPHIC DATA

WEATHER DATA

BELT SPEED

SHIPS SPEED

WASH TEMP.

WASH FLOW RATE

PONTOON DAMPING

HYDROVANE CONTROL

**CONTROL OUTPUTS**

0013500

FIG.9.

FIG.10.

FIG.11.

1

2

BELT TRAVEL

SHIPS TRAVEL

0013500

Application number

EP 79 30 2968

## EUROPEAN SEARCH REPORT

| DOCUMENTS CONSIDERED TO BE RELEVANT | | | CLASSIFICATION OF THE APPLICATION (Int. Cl.) |
|---|---|---|---|
| Category | Citation of document with indication, where appropriate, of relevant passages | Relevant to claim | |
| | US - A - 2 470 418 (VERNER) <br> * Column 1, lines 29-55; column 2, lines 1-14 * <br> -- | 1,2,9 | E 02 B 15/04 |
| | US - A - 3 748 682 (RHODES) <br> * Column 1, lines 21-26 * <br> -- | 3 | |
| | DE - B - 1 098 877 (ESSER) <br> * Column 4, lines 1-9; figure 3 * <br> -- | 5 | TECHNICAL FIELDS SEARCHED (Int.Cl.) |
| | US - A - 3 744 257 (SPANNER) <br> * Column 2, lines 60-68; column 3, lines 1-10; figure 1 * <br> -- | 8,9,11 | E 02 B <br> B 01 D |
| | US - A - 4 053 406 (DESLAURIERS) <br> * Column 4, lines 33-60; claim 12; figure 6 * <br> -- | 8,9,11 | |
| | US - A - 3 884 807 (HEDDON) <br> * Column 7, lines 12-20; column 8, lines 1-19 * <br> -- | 12 | CATEGORY OF CITED DOCUMENTS <br><br> X: particularly relevant <br> A: technological background <br> O: non-written disclosure <br> P: intermediate document |
| | PETROLEUM ENGINEER INTERNATIONAL, vol. 49, no. 3, March 1977, pages 11-14 <br> Dallas, Texas <br> "Zero-relative-velocity oil skimmer" <br> * Page 11, lines 14-18 * <br> ---- | 13 | T: theory or principle underlying the invention <br> E: conflicting application <br> D: document cited in the application <br> L: citation for other reasons <br><br> &: member of the same patent family, corresponding document |

The present search report has been drawn up for all claims

| Place of search | Date of completion of the search | Examiner |
|---|---|---|
| The Hague | 11-03-1980 | HANNAART |

EPO Form 1503.1 06.78